# EUROPEAN PATENT APPLICATION

(11) **EP 4 439 243 A1**
(43) Date of publication of application: **02.10.2024**
(21) Application number: 23165755.2
(22) Date of filing: 30.03.2023
(51) Int. Cl.: G06F 3/01, G06F 3/042

(54) **SENSOR ARRANGEMENT FOR TOUCHLESS CONTROL OF A COMPUTER DEVICE, SENSOR SYSTEM AND ELECTRONIC DEVICE**

(71) Applicant: AMERIA AG, 69124 Heidelberg (DE)
(72) Inventor: Seiler, Martin, 79238 Ehrenkirchen (DE); Ensslen, Christian, 70469 Stuttgart (DE); Hixon, Dennis, 74931 Lobbach (DE); Schneider, Franziska, 76275 Ettlingen (DE); Rothvoss Buchheimer, Maria, 69214 Eppelheim (DE)
(74) Representative: Best, Bastian

(57) **Abstract**

The present invention relates to a sensor arrangement (100) for touchless control of a computer device, to a sensor system and an electronic device, wherein the computer device and/or the at least one actuator being controllable by a user using a user's hand and/or one or more fingers of the user's hand, optionally using a keyboard, wherein the sensor arrangement is configured to be arranged relative to an interaction surface, such as a surface of a keyboard, a tabletop and/or lap of a user, and such that an interaction space (50) arranged above the interaction surface can be observed, wherein the sensor arrangement comprises at least a first sensor group (10, 20) comprising at least one sensor device (11,12; 21, 22), the first sensor group having a first array field of view (30) and being capable of observing a first spatial array detection area encompassing at least a part of the interaction space (50), wherein the sensor arrangement is configured to be arranged such that an interaction space (50) arranged above the interactions surface can be observed, and wherein the sensor arrangement (100) is further configured for capturing sensor data, in particular depth sensor data, of a movement of at least one finger, preferably of the fingertip of the at least one finger, of a user at least while the user's hands are arranged at least partially above the interaction surface.

## Description

### TECHNICAL FIELD

The present invention generally relates to a sensor arrangement for at least partial touchless control of a computer device and/or of at least one actuator. One use case of the disclosed invention, among other advantageous applications, is, for example, providing a sensor arrangement and/or a sensor system and/or an electronic device for touchless moving a pointer, such as a mouse pointer and/or a text cursor and/or moving an object having a controllable actuator, in accordance with a movement of a user's hand without the need for a physical input device like a mouse or a stylus, thereby providing a particularly efficient and convenient user experience.

### BACKGROUND

Electronic devices having a display means, in particular computer devices, have nowadays become omnipresent in various areas of modern life. The display means of such devices is usually designed to provide a Graphical User Interface (GUI) with which a user can interact. Such electronic devices have become smaller and more portable over time. Laptops or tablet computers, for example, are highly portable and can be easily used on the go. Further, the usage scenarios of such devices have steadily increased. For example, most recently due to increasing digitization in the wake of the Covid-19 pandemic, said electronic devices are progressively replacing paper documents which resulted in a significant increase in demand for such devices. Thus, electronic devices, as described above, are used in various situations, for example for gathering desired information by an online search, web browsing, reading e-books, reading newspapers, using applications which support the user in private or professional matters, communicating with other persons using text messengers and/or video conferencing tools and/or voice messaging tools and/or calling tools, or the like. Said electronic devices may also be connected to other, in particular larger, display screens, such as television screens in order to do presentations, lectures or the like. Examples for electronic devices include computer devices, portable computers, convertible computers, laptops, netbooks, tablet devices, mobile devices, TV devices, (video) projector devices, infoand/or entertainment systems, in particular for cars, and/or smartphones, or the like.

For providing a user with a user interface to interact and/or control said electronic devices, various input options are known which are usually based on physical input devices. On the one hand, said physical input devices may be built-in physical input devices, such as physical buttons, a keyboard, volume button(s), on-off button(s), or the like. On the other hand, said electronic devices may comprise interfaces for wireless and/or wired connection of physical input devices which are capable to provide signals to the electronic device upon usage by a user causing the electronic device to perform intended actions. Examples for such, so to say, external physical input devices, include: a standard computer mouse, an ergonomic (vertical) computer mouse, an input stylus, a graphic tablet (including a pen), a trackpad (or touchpad), a trackball, a joystick, a keyboard, a steering wheel, a remote control, or the like. All said physical input devices are essentially used by a user's hand.

In any of the above-mentioned applications of said electronic devices it may happen that the interaction using said physical input devices is not comfortable and/or has disadvantages. For example, external physical input devices must be taken along with the electronic device when travelling. It may easily happen that such external devices are forgotten or intentionally not used in order to save space in the suitcase, whereby the user experience while using the electronic device suffers. The main solution available for this, is using a touchscreen or a different built-in physical input device. For example, for replacing an external mouse, a touchscreen or a built-in touchpad may be used, whereby being less comfortable during usage. In particular, a touchscreen may not be the preferred physical input device for many users since the way how the electronic device is controlled, significantly differs compared to using an external mouse. Other existing solutions replacing physical input devices are mainly voice based interaction schemes but do not satisfy the desire to have an intuitive and accessible user interface to provide user input to an electronic device.

Also gesture control is known. However, this control method is often not precise and smooth enough for desktop applications as moving a mouse pointer or a text cursor precisely.

US 8,907,894 B2 discloses a touchless input device for a computer replacing a computer mouse which does not require physical contact between the user and any part of the input device. The touchless input device uses multiple, linear near infrared, optical sensors and multiple near infrared light emitters working in a plane in space, all held inside a frame with an opening that defines the detection region. The device images the plane and processes the images to determine the presence, location and velocity of objects in the plane. The operator introduces an object, such as a finger, into the plane and moves the object in the plane to emulate the motion of a computer mouse across a desktop. Mouse buttons and other functions are emulated by unique motions in the plane. The device communicates these motions and events to the computer typically using a Universal Serial Bus.

US 2015/0277566 A1 discloses an information handling system including a camera mounted in the side edge surface for detecting gestures by a user in a gesture detecting zone next to the system and including a gesture detection system for interpreting free space gestures and initializing cursor control commands.

US 2021/0271328 A1 discloses an electronic device including a sensor. and a processor. The sensor is configured to detect a movement of a hand of a user controlling a virtual input device. The processor is communicatively coupled to the sensor. The processor is configured to translate the movement of the hand of the user detected by the sensor into a control input to the electronic device and to execute control the control input.

US 2014/201685 A1 discloses a method that allows a computing device to determine a user input. The method includes detecting one or more user input objects in a 3-dimensional field relative to a 2-dimensional surface, determining coordinates for the one or more user input objects relative to the 2-dimensional surface, and determining a user input based on the coordinates.

US 2014/139430 A1 discloses a virtual touch method applied to a computer provided with a camera. The method includes defining a virtual touch plane in the space in front of the screen of the computer, capturing a reference fingertip image of a finger touching the virtual touch plane by the camera and storing the reference fingertip image, capturing an operation fingertip image of the finger in a touch operation by the camera, and comparing the sizes of the reference fingertip image and the operation fingertip image to determine whether the finger touches or pierces through the virtual touch plane.

Further examples for user input control are known from US 10,228,848 B2, and US 2015/0205360 A1.

In view of the above, there is a need to provide a sensor arrangement that fulfills at least partially the requirements of accessibility, ease of use and convenience of use, at the same time providing a user person with a positive user experience, in particular with high precision and a smooth reaction with minimized latency in response to a user action.

It is therefore the technical problem underlying the present invention to provide means for an improved user interface for controlling electronic devices, thereby overcoming the above-mentioned disadvantages of the prior art at least in part.

### SUMMARY OF THE INVENTION

The problem is solved by the subject-matter defined in the independent claims, in particular by a sensor arrangement, a sensor system and an electronic device. Further, in particular advantageous modifications of embodiments of the invention are defined in the dependent claims as well as in the description and the figures. The wording of the original claims is hereby expressly incorporated by reference as part of the description and thus of the disclosure of this application.

According to a first aspect of the present invention, a sensor arrangement for at least partial touchless control of a computer device and/or of at least one actuator is provided, wherein the computer device and/or the at least one actuator are being controllable at least partly by a user using a user's hand and/or one or more fingers of the user's hand, optionally using a keyboard. The sensor arrangement may be configured to be arranged relative to an interaction surface, such as a surface of a keyboard, a tabletop and/or lap of a user, and such that an interaction space, in particular a three-dimensional interaction space, arranged at least partly above the interaction surface can at least partially be observed. The sensor arrangement may comprise at least a first sensor group, in particular a first sensor array, comprising at least one sensor device, the first sensor group having a first array field of view and being capable of observing a first spatial array detection area encompassing at least a part of the interaction space. The sensor arrangement may be configured to be arranged such that in a functional state of use an interaction space, in particular a three-dimensional interaction space, arranged at least partly above the interaction surface, in particular above the keyboard, can at least partially be observed for at least partial touchless control of the computer device and/or of the at least one actuator, wherein the sensor arrangement is further configured for capturing sensor data, in particular depth sensor data, of a movement of at least one finger, preferably of the fingertip of the at least one finger, of a user at least while the user's hands are arranged at least partially above the interaction surface.

A sensor arrangement according to the first aspect of the invention can help to improve the user experience by allowing the user to interact with the computer device in a way that feels natural and comfortable, and by reducing the need for frequent pauses and adjustments.

The sensor arrangement according to the present invention allows to at least partially replace traditional computer interfaces such as physical input devices like mouses and touchscreens. This technology may enable users to interact with computers without touching any physical objects, using only one of their hands and hands and body gestures.

With a sensor arrangement according to the present invention, in particular when combined with a sufficient method for processing sensor data captured by the sensor arrangement, an advantageous, in particular a precise and smooth touchless control of a computer device and/or an actuator or an object can be achieved. With a sensor arrangement according to the present invention, at least, for example, a precise and smooth touchless control of a mouse pointer or a text cursor of a computer device may be achieved. One example of an advantageous use case of a sensor arrangement of the present invention is touchless control of a mouse pointer or a text cursor of a computer device which is displayed to the user, for example by using a display means such as a display screen, a monitor and/or a projector device projecting a displayed scene on a projection surface, in particular a projection wall.

A "sensor arrangement" in the meaning of the present invention refers to an arrangement comprising at least one sensor device configured for being arranged with defined position and orientation relatively to at least one other component, in particular to at least one component to be sensed or being arranged with defined position and orientation relatively to at least one other component. Said component may in particular be a further sensor device, a housing, any other component being able to fix the sensor device in a defined position and/or with defined orientation, and/or a probe or an object, in particular a probe or an object of which sensor data should be captured.

A sensor arrangement may include one or more sensor devices and/or one or more emitting devices, wherein in particular one or more sensor devices and/or one or more emitting devices may form a sensor group and/or a sensor array.

In the meaning of the present invention, the term "sensor device" means a device which is designed to detect physical input from the environment and to generate sensor data depending on the physical input.

A "keyboard" is an input interface which is mainly configured for input text and/or text commands and/or other control commands by typing and/or pressing at least one key. A keyboard may be a built-in keyboard, built in an electronic device, particularly in a computer device. Alternatively, a keyboard may be an external physical keyboard or may be a virtual keyboard, e.g., by way of a projection onto a surface, and/or a displayed keyboard displayed on a display screen.

In the meaning of the present invention, the term "sensor group" refers to a collection or set of one or more individual sensor devices. The individual sensor devices may be organized and deployed together as a cohesive unit, for example in the same housing, to achieve a specific sensing objective. A sensor group may comprise one or more sensor devices that are all of the same type or of different types (i.e. using different sensing modalities). The individual sensor devices may be arranged in a variety of configurations, such as in a fixed array, in particular with defined position and/or orientation to each other (="sensor array") or distributed and independently from each other. The use of a sensor group can provide advantages over single sensor devices, such as greater coverage, redundancy, and robustness to noise and other sources of error.

In the meaning of the present invention, the term "sensor array" refers to a sensor group comprising at least one sensor device, the at least one sensor device being arranged with a defined position and/ or orientation. The term "sensor array" may in particular refer to a group of sensor devices that are arranged with defined position and/or orientation to each other, in particular in a specific geometric pattern or configuration to enable the simultaneous sensing of multiple physical parameters in a given environment. Sensor arrays may be designed to measure different properties and/or characteristics, in particular to capture different sensing information. The arrangement of the sensors in the array can vary and may include regular or irregular patterns, depending on the specific application. The output from the sensor array can be processed using various signal processing techniques to extract useful information about the environment.

The term "field of view" with respect to a sensor device means the extent or range of the surrounding environment that the sensor device can detect or "see". In other words, it is the, in particular angular, extent of the region that is visible or accessible to the sensor device. For example, in a camera, the field of view is the area of the scene that can be captured, in particular by the lens, and recorded, preferably by the camera's image sensor. Similarly, in a radar or lidar system, the field of view may refer to the angular range of the system's antenna or beam that can detect objects in the surrounding environment.

In the meaning of the present invention, the term "array field of view" refers to the field of view of a sensor array.

In the meaning of the present invention, the term "detection area" refers to the specific physical region or area in the environment where a sensor device is capable of detecting the presence of an object or a specific stimulus.

In the meaning of the present invention, the term "spatial array detection area" refers to a spatial detection area of a sensor array, that means to the spatial specific physical region or area in the environment where a sensor array is capable of detecting the presence of an object or a specific stimulus. The detection area of a sensor array may vary depending on the type of sensing technology used, the physical characteristics of the sensor array and its at least one sensor device, and the properties of the environment being sensed. For example, for a motion sensor device, group or array, the detection area would be the physical region where the sensor device, group or array can detect movement, while for a temperature sensor device group or array, the detection area would be the region where temperature can be measured, in particular as accurate as expected or required. The detection area can be influenced by various factors such as the range and sensitivity of the sensor devices, their arrangement, the angle of detection, and the presence of obstructions or interference.

A sensor device may, for example, be a camera, in particular a RGB camera or an infrared camera. Groups of one or more sensor devices may build a sensor array, wherein with respect to the present invention a sensor group means an undefined grouping of sensor devices and a sensor array means a defined arrangement of at least one sensor device, in particular a defined arrangement of one or more sensor devices relative to each other.

A sensor array with respect to the present invention may in particular be or comprise a 3D imaging sensor means, in particular a 3D imaging sensor means configured for capturing depth information, that means depth sensor data. A 3D imaging sensor means may include at least one or more sensor devices and, depending on the type of sensor means, (optionally) one or more emitting devices, in particular light emitting devices.

The at least one sensor device of a sensor array may be capable, in particular alone or in combination with at least one other sensor device and/or emitting device, of capturing three-dimensional images of an environment, in particular of depth information of the environment, for example of objects such as a user's hand. Thereby, outline, position, orientation and/or movement of an object can be detected in space.

There are several different types of 3D imaging sensor means, including time-of-flight (TOF) sensor means, structured light sensor means, and stereo vision sensor means.

TOF sensor means, in particular TOF sensor arrays, work by emitting a light pulse and measuring the time it takes for the light to bounce back from an object, enabling them to create a three-dimensional map of the object's shape and distance. One example for said TOF sensors is a LiDAR sensor. Thus, a TOF sensor array may comprise at least an emitting device and a sensor device, in particular a camera sensor device.

Structured light sensors use a pattern of light and shadow, e.g., a projected pattern projected by a laser projector, and at least one camera to create a three-dimensional map of an object. Thus, a structured light sensor array may comprise at least an emitting device and a sensor device, in particular a camera sensor device.

Stereo vision sensors use at least two cameras to create a three-dimensional image by comparing the images captured by each camera. The cameras may for example be infrared cameras. Thus, a stereo vision sensor array may in particular comprise a first camera, preferably a 2D camera (infrared or RGB camera), as a first sensor device and a second camera, preferably also a 2D camera (infrared or RGB camera), in particular a sensor device of the same type as the first sensor device, as a second sensor device. In addition, in particular for improvement of accuracy and/or calibration capabilities, a stereo vision sensor array may further comprise at least one emitting device, for example a laser projector such as an infrared laser projector or the like.

An emitting device may, for example be a projector such as a laser projector or the like. The emitting device may for example be an infrared laser projector. Preferably, a projector is configured to emit light having a wavelength which is outside the human visible areas of wavelengths, thus not disturbing the user. Using a projector projecting a pattern may increase the accuracy of captured sensor data.

In one embodiment, at least one sensor array, in particular the first sensor array and/or the second sensor array, may comprise a first sensor device and at least a second sensor device, wherein the first sensor device is preferably a camera, in particular an infrared or RGB camera, and wherein the second sensor device is preferably a camera, in particular an infrared or RGB camera, and wherein the field of view of the first sensor device and the field of view of the second sensor device are arranged overlapping almost completely and forming the spatial array detection area associated to the array comprising the sensor devices for at least partially observing, in particular by depth sensing, the interaction space.

In the meaning of the present invention the term "touchless control" refers to a control which can be performed at least temporarily touchless, that means without touching a physical user input device for generating a control command. In other words "touchless control" means generating a control command without touching, in particular without using, a physical input device like a computer mouse, a joystick, a graphic tablet, a stylus, a trackpad or touchpad, a trackpoint or the like. One example for touchless control is among other 3D free space gesture control. The term touchless should preferably be understood in relation to the electronic device or computer device. This means that a touchless interaction or a touchless user input does not necessarily mean that the user does not touch any objects or components of the electronic device or computer device in general, also not while the touchless control is performed, but that for the specific desired user interaction or user input (for the generation of at least one control command), no touching or use of a physical input device intended for this purpose is required.

In the meaning of the present invention the term "computer device" means a type of an electronic device, in particular an electronic device that is specifically designed to execute various computing tasks, in particular computational and data processing tasks. Computer devices are for example: desktop computers, laptops, tablets, and smartphones. Also, other types of devices such as television sets or TV devices, in particular so-called smart TVs, settop-boxes and gaming devices, also referred to as gaming consoles, are examples of computer devices. Also info- and entertainment devices, navigation devices and projector devices as video and/or cinema projectors or beamers can be considered as a computer device. Furthermore, any type of other physical apparatus with at least some computing functionality may be referred to as a computer device, such as without limitation a computer device which is built into another higher-level electronic device such as a Virtual Reality device, a car, a vehicle and/or the like.

Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage.

A computer device may in particular be configured for interaction with a user using at least one input and/or output device, in particular via at least one physical input and/or output device. However, a computer device may also be configured for interaction with a user via a virtual input and/or output device, for example via a projected input and/or output device projected by using a laser projector, for example via a virtual keyboard projected on a surface of a table by using a laser projector.

A computer device may in particular be configured for to be controlled using at least one input device, in particular by using at least one physical or virtual input device. Common physical input devices include mouses, trackpads, trackpoints, keyboards and touchscreens, while common physical output devices include monitors, speakers, and printers. These devices allow the user to input data and commands into the computer device and receive output from the computer device.

Various other components may be included in a computer device, such as graphics processing units, network interface cards, and storage devices like hard drives and solidstate drives. These components help to expand the capabilities of the device and allow it to perform more complex tasks. In summary, a computer device is an electronic device that is specifically designed to execute various computing tasks. It comprises at least the components that are necessary for its operation.

In the meaning of the present invention the term "actuator" is a type of device or a unit, in particular a device configured to be controlled, in particular at least by using at least one CPU, in particular by a computer device. An "actuator" is in particular designed to convert energy, in particular into mechanical motion or physical force. An actuator may for example convert electrical energy into mechanical motion. Actuators are used in a variety of applications, where causing motion, force, or change of a position is required. An actuator may be electromechanical, electric, hydraulic, or pneumatic, and may operate using different mechanisms, such as for example linear or rotary motion, depending on the specific application. Some examples of actuators include electric motors, hydraulic cylinders, solenoids, and pneumatic pistons. The use of actuators allows for precise control of physical processes. An actuator may in particular be configured for causing controlled, in particular remote control, movement of an object.

Such an "object" may be any object, in particular any object configured for remote control, preferably any physical object comprising at least one actuator, wherein the actuator can in particular be controlled or manipulated by an external system or user, for example a robot or a car configured for remote control. The actuator may be a part of the object's internal mechanism or may be attached externally. The actuator can in particular be controlled by various means, such as through a computer program, a remote control, by manual operation, and in particular at least partly by touchless control. The ability to control the actuator allows the object to perform specific actions or functions in response to a given input or signal or control command.

In the meaning of the present invention, the term "display means" refers to any means for presenting visual content to a user. This may include a broad range of technologies and formats. A display means may be or comprise an electronic display screen, a projection system, a projection surface, a holographic system, an Augmented Reality device, a Virtual Reality device, and/or the like.

An electronic display screen may be perhaps the most common type of a display means in use nowadays. An electronic display screen can be or comprise a LCD, LED, OLED, Retina, E-Ink and/or other type of display, which are in general used in devices like laptops, smartphones and smartwatches to televisions and/or large format displays. An electronic display screen may rely on backlighting or other forms of illumination to produce an image and may be capable to offer a wide range of color and resolution capabilities.

Projection systems are another type of display means, which use light to project an image onto a projection surface such as a screen or wall. A projection system may be or comprise a traditional projector and/or a projector using newer technologies such as laser projection and digital light processing (DLP). A projection system may be used in a setting like a movie theater, a conference room, and/or a large space.

Projection surfaces may come in various shapes, sizes, and materials, and can be used for a wide range of applications. A projection surface might be, for example, a plain, preferably white, wall. It is a simple and inexpensive way to project images, videos, and presentations. Another type of a projection surface is a projector screen.

Projector screens are designed specifically for projection purposes. They come in various sizes and materials, such as vinyl, fabric, and glass beads. A projector screen may be used for applications where a particularly high quality of a projection is desired.

Another type of projection surface is a transparent projection surface. Transparent projection surfaces are made of glass or acrylic and may be used for advertising or digital signage. A transparent projection surface may for example be used for a storefront display, in a museum or a gallery, where a user should see both the projection and an exhibit behind it.

Holographic display means are a type of display means which uses complex optics to produce three-dimensional images that appear to float in space. A holographic display means may be used, for example, for product visualization, scientific visualization, and entertainment.

Augmented Reality devices and Virtual Reality devices may comprise display means different to each other to create their respective immersive experience. An Augmented Reality device may use a transparent display means such as a head-mounted display (HMD) or a smart glass. This display means allows the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. A Virtual Reality device may use an opaque display such as a head-mounted display or a projection system. A Virtual Reality device, in particular the display means of a Virtual Reality device, may block out the real world and immerse the user in a virtual environment. The display means used in a Virtual Reality device may in particular be a high-resolution LCD or OLED screen.

The term "interaction space" may be understood in the context of the present invention as comprising or being a 3D space in which a user may act, in particular move at least one of the user's hand to provide touchless user input. An interaction space may in particular be arranged adjacent or in the nearfield of an electronic device configured to be controlled by touchless control. This arrangement may for example be advantage for electronic devices like laptops, tablets, desktop computers and smartphones.

Alternatively, the interaction space may also be arranged with significant distance to the device or object and/or actuator to be controlled. This allows touchless remote control. Such an arrangement may for example be advantageous for a projector device or beamer mounted to a ceiling of a meeting room, wherein the relevant interaction space may be a rectangular space arranged adjacent or on or above a surface of a table in the meeting room. Also in medical applications such an arrangement might be advantageous, for example in X-ray applications. Such an arrangement might in general be advantageously when devices, objects and/or actuators have to be controlled remotely.

In particular, the term interaction space may be understood as a space within user interaction may be captured.

In one embodiment according to the present invention, the interaction space may be a space between the user and a device, object or actuator to be controlled, for example, when the user faces a display means, the interaction space may be the space being located between the user's face and the display means. Preferably, the interaction space may be or extend at least partly or completely within or equal to at least one field of view of at least one sensor device of a corresponding sensor arrangement for capturing sensor data of user interaction. In particular, the interaction space may be or extend at least partly or completely within or equal to a spatial total detection area of a corresponding sensor arrangement for capturing sensor data of user interaction. The interaction space may have a spatial orientation and/or location that is particularly convenient for a user person for providing touchless user input. The user person may be provided with a control option to adjust the spatial orientation and/or location of the interaction space.

With respect to the present invention, the term user "interaction" refers to any user input provided by a user person. The user may provide user input in particular with the intention to cause the electronic device to perform an action and/or to control the electronic device.

With respect to the present invention, the term "sensor data" may be understood as data being collected or comprising data collected by at least one sensor device, sensor array or the sensor arrangement, in particular data which has also been captured by at least one sensor device and/or sensor array of the sensor arrangement or by the sensor arrangement.

As mentioned above, the sensor arrangement may comprise at least one sensor device being or comprising a camera, that means an imaging sensor device. Thus, in this case, the sensor data includes at least partly image data.

In one embodiment, in particular in a preferred embodiment, the sensor arrangement may be configured to capture depth sensor data, in particular a 3D image, of at least a part of the interaction space.

In one embodiment of the present invention, the computer device and/or the at least one actuator may comprise a keyboard and/or be at least communicatively coupled to a keyboard.

In one embodiment of the present invention, the computer device may comprise and/or may be communicatively coupled to display means, and/or sensor means and/or an optional keyboard. The keyboard may be a physical keyboard, which may be integrated into the electronic device, in particular computer device or which may be an external periphery device of the electronic device, in particular computer device, or a virtual keyboard, e.g., generated on a projection surface using projection means. The sensor arrangement may be configured for observing an interaction space. The interaction space may be arranged at least partially above an interaction surface. The interaction surface may comprise a surface of the keyboard, a tabletop, in particular a tabletop on which the electronic device, in particular computer device, is arranged, and/or a lap of a user, in particular a user of the electronic device, in particular computer device.

The interaction space may have a spatial orientation and/or location that is particularly convenient for the user person for providing touchless user input. It may be provided that the user person is provided with a control option to adjust the spatial orientation and/or location of the interaction space.

As already mentioned further above, the interaction space may be arranged a least partially above the keyboard. More precisely, the arrangement may be above a keyboard surface of the keyboard. The interaction space may capture the entire area above the keyboard surface, or it may capture only a relevant portion thereof, or it may even capture an area greater than the keyboard surface. Accordingly, the interaction space captures at least part of the space in which the user's hands are normally placed when performing a typing activity.

In a further embodiment the sensor arrangement is configured to capture sensor data of the movement of the at least one finger while the user's hands are arranged at least partially above the interaction surface, e.g., the keyboard surface and/or within the interaction space. This enables a very efficient touchless control during which the user can quickly, efficiently and ergonomically switch between a first posture, e.g., a typing posture in which the user's hands are performing user inputs on the keyboard, and a gesture input posture in which the user's at least one finger is moving to trigger control commands for manipulating content displayed on the display means. Especially in terms of efficiency, the disclosed approach can provide an improvement by allowing the user to perform tasks that require pointing and other activities, such as typing, without having to pause and readjust the user's posture.

The term "physical input device" refers to any device that allows a user to input data and/or commands, in particular to a computer device. Different physical input devices in a wide variety of forms for various purposes and use cases are known in general. A physical input device may for example be or comprise a computer mouse, a keyboard, a touchpad, a trackpad, a trackpoint, a touchbar, a joystick, a gaming console controller, a remote control and/or a touchscreen. By an input device, in particular a mouse pointer, preferably on a screen, and/or a text cursor can be moved, and/or one or more items can be selected and/or objects can be controlled. Mouse pointers and text cursors can ergonomically and efficiently be controlled using computer mice, trackballs, trackpoints, touchbars and/or touchpads, while joysticks are more convenient for gaming and other applications that require precise control, in particular precise control in space (three-dimensional, in particular with defined velocity and/or acceleration).

In one embodiment of the present invention, in particular in a preferred embodiment, the sensor arrangement may further comprise at least one further sensor group, in particular at least one further sensor array. The at least one further sensor group may (also) comprise at least one sensor device. The at least one further sensor group may have a further array field of view and being capable of observing a further spatial array detection area encompassing at least (also) a part of the interaction space, preferably at least partly another part of the interaction space.

In one embodiment, in particular in a preferred embodiment, the sensor arrangement may comprise at least two sensor arrays, each sensor array including at least two sensor devices. The sensor devices may be devices capable of capturing sensor data, preferably depth sensor date, e.g., imaging data, but may also refer to supporting devices which support other sensor devices in enhancing the precision of capturing sensor data, e.g., an infrared projector. For example, one sensor array may be configured as a stereo vision sensor array and may comprise two infrared cameras and/or two RGB cameras, and one infrared laser projector, thus the sensor array comprising three sensor devices in total.

The first sensor group and the at least one further second sensor group may be arranged spaced apart from each other, in particular such that the first spatial array detection area and the at least one further spatial array detection area define a spatial total detection area. Said spatial total detection area may in particular be a continuous spatial total detection area formed by the first array detection area of the first sensor group and by the further array detection area of the at least one further sensor group, wherein in particular the first spatial array detection area and the at least one further spatial array detection area are at least located adjacent to each other, preferably overlapping partially.

Alternatively, the spatial total detection area may comprise at least two separate interaction areas or zones which are not overlapping or not located adjacent to each other but are arranged or located spaced apart from each other.

The term "spatial total detection area" in particular refers to a resulting spatial detection area which can be observed by the sensor arrangement.

The array field of view of at least one sensor device, sensor group and/or sensor array may be, at least partially, cone-shaped and/or at least partially pyramid-shaped and/or at least partially truncated pyramid-shaped.

However, in a preferred embodiment, the spatial total detection area may in particular have a shape different from a cone, a truncated cone, a pyramid or a truncated pyramid.

By using two sensor arrays arranged spaced apart from each other, in particular with defined position and/or distance and/or orientation to each other, in many cases a defined and in particular adapted spatial total detection area can be provided, in particular a total detection area having dimensions and/or a geometry adapted to an interaction space required or wanted for a specific use case of touchless control. For example, by using two sensor arrays arranged spaced apart from each other, in particular with defined position and/or distance and/or orientation to each other, a rectangular or cuboid interaction space, which is a very advantageous type of interaction space in particular for mimicking user input interactions for control of computer devices as laptops, can be provided or realized.

By arranging at least two sensor arrays, each in particular configured for depth sensing, in particular at least partly overlapping, the size and dimension of the overall spatial detection area of the sensor arrangement can be increased without increasing the distance between the sensor array and the interaction space to be observed. Thereby, several disadvantages occurring when using one sensor array only due to the usually cone-shaped detection area which broadens with distance from the sensor array, can be avoided, for example: increasing resolution requirements due to distance and opening angle, higher sensor quality demands to maintain a good signal-to-noise ratio, and undesired installation size affects having negative impact on product design and stability.

With a sensor arrangement according to the present invention, in particular with a sensor arrangement comprising at least two sensor devices and/or at least to sensor arrays, the usually cone- and/or pyramidically shaped fields of view can be combined, in particular by at least partial overlapping, to form a unified 3D spatial total detection area that meets the desired dimension requirements, in particular with respect to the required interaction space to be observed by the sensor arrangement.

A sensor arrangement according to the present invention allows in particular to position at least one sensor device closer, that means with a smaller distance, to the interaction space to be observed. Thereby, resolution and quality requirements can be reduced, while further a more compact form factor and enhanced stability can be enabled.

In order to create a 3D image of the environment, in particular of the interaction space, several options are available, as described above. The term 3D image may, in this sense, be understood broadly, i.e., including any data set which describes a 3D environment. The sensor arrangement may comprise one or more sensor arrays, each sensor array being configured to observe one essential direction of view, e.g., left side and right side of a computer device like a laptop during usage by a user facing the computer device.

In a first example, which may be a stereovision approach, at least one sensor array may comprise two infrared cameras. By overlapping and/or mapping the captures sensor data of the two infrared cameras, a 3D image of the environment may be created.

In a second example, which may be a stereovision approach, at least one sensor array may include two infrared cameras and one infrared projector configured to project an infrared laser pattern. Compared to the first example, the second example has a higher precision due to the infrared laser pattern that is captured by at least one, preferably both, of the infrared cameras.

In a third example, which may be a stereovision approach, at least one sensor array may include two 2D cameras, e.g., being a standard RGB-camera.

By overlapping and/or mapping the captured sensor data of the two 2D cameras, a 3D image of the environment may be created. Compared to the first example, the precision in detecting objects, such as the user's hand, is higher with RGB cameras because color information may be used to determine objects.

In a fourth example, which may be a stereovision approach, at least one sensor array may include two 2D cameras, e.g., being standard RGB-cameras, and one projector configured to project a laser pattern. Compared to the third example, the fourth example has a higher precision due to the laser pattern that is captured at least one of the cameras.

In a fifth example, which may be a structured light approach, at least one sensor array may include one infrared camera and one infrared laser projector configured to project an infrared laser pattern. A 3D image of the environment may be created solely based on sensor data captured by the one infrared camera by taking into account distortions of the infrared laser pattern by the shape of the environment and/or objects in the environment.

In a sixth example, which may be a time-of-flight approach, at least one sensor array may include a TOF-sensor configured to capture a precise 3D image of the environment based on measurement of time-of-flight of emitted light, as described above.

In one embodiment of the present invention, in particular in a preferred embodiment, the sensor arrangement may thus in particular be configured for observing a rectangular or cuboid interaction space. The interaction space, in particular the rectangular or cuboid interaction space, preferably comprises a spatial expansion and/or having a geometry adapted to a spatial expansion required for mimicking the use of a defined physical input device. The interaction space may in particular be encompassed completely by the spatial total detection area.

Preferably, at least one spatial array detection area of a sensor group and/or the spatial total detection area is at least partially shaped different from a cone-shape and/or a truncated cone-shape. However, at least one array field of view may partially cone-/pyramid-shaped or at least partially truncated cone-/pyramid-shaped.

In a preferred embodiment, the resulting spatial total detection area has a spatial expansion for optimal usability such that the sensor arrangement is capable of identifying objects like a user's hand within a desired input area.

The spatial total detection area may in particular be adapted to an intended use case, in particular to the dimension and geometry of a wanted or required interaction space. This can be achieved by a sensor arrangement comprising one or more sensor devices and/or sensor arrays, in particular by defined and selected arrangement of several sensor arrays with defined positions and orientations relatively to each other, wherein the sensor devices and/or sensor arrays are arranged such that it results in the wanted and/or required spatial total detection area.

In one embodiment of the present invention the shape of the resulting spatial detection area may be adapted to the environmental setup the sensor arrangement is configured for, in particular dependent on the setup and geometry of the device the sensor arrangement is configured for touchless control.

In one embodiment of the present invention, in particular in addition or alternatively to an adaption to a wanted or required interaction space, the spatial total detection area may be adapted, in particular by defined arrangement of at least two sensor arrays relatively to each other to size and/or geometry of a display, in particular to a display screen size and/or a projection surface size. This might improve the user experience and accuracy of the touchless control, for example when using a curved display screen, for example for touchless control of a mouse pointer and/or a text cursor displayed on a curved display screen.

In any case, the resulting spatial detection area may be adapted such that an advantageous capturing of sensor data, in particular of depth sensor data, of a user's hand and/or of at least one or more parts of a user's hand while the user mimics use of a physical input device at least partially within the interaction space, is enabled.

In one embodiment of the present invention, in particular in a preferred embodiment, the sensor arrangement may further be configured also for touch control of a computer device and/or at least one actuator, and further comprises at least one touch sensitive sensor device.

This may for example be enabled by a use of a touch button or touch sensor and/or a proximity sensor, for example for switching between operation modes of a computer device, for example for entering a touchless control method when a touch is detected and leaving of the touchless control method when release of the button is detected. A very ergonomic arrangement can for example be achieved with a touch button intended to be touched by a user's thumb and arranged in a corresponding area, for example near the space key of a keyboard.

By one or more separate buttons and/or (common) additional input elements in an easy and advantageous manner, for example a separation of a "click" command and/or switching between operation modes, in particular for switching between touchless control mode (imaginary physical input device mode) and a touch control mode or real physical input device control mode can be enabled.

In one embodiment of the present invention the sensor arrangement may further be configured additionally for detecting one or more free 3D space gestures and/or to generate at least one control command depending on the detection of at least one free 3D space gesture.

In one embodiment of the present invention, in particular in a preferred embodiment, the sensor arrangement may be configured for being integrated into an electronic device, in particular in an electronic device comprising a display screen and/or a keyboard, preferably in a computer device comprising a display screen and/or a keyboard.

An electronic device may be understood as a tool or apparatus that relies on electronic components to operate. In this context, an electronic component may be any component that uses electrical signals to perform a specific function. Electronic devices for examples are computer devices, in particular laptops, tablets, smartphones, personal computers, desktop computers, but also projectors like video or cinema beamers, display stands, display screens, monitors, and/or keyboards (integrated and/or external). Also TV devices, info- and entertainment devices are electronic devices in the meaning of the present invention. Also vehicles, as for example passenger cars, have to be considered as an electronic device. Into all of them a sensor arrangement according to the present invention and/or sensor system comprising a sensor arrangement to the present invention may be at least associated with or integrated partially or completely.

According to a second aspect of the present invention, a sensor system is provided for at least partial touchless control of a computer device and/or of at least one actuator, in particular for at least partial touchless control of a computer device comprising a display means and/or being at least communicatively coupled to a display means and/or to one or more actuators of an object, in particular for at least partial touchless control of a laptop, a tablet, a personal computer, a TV device, an info- and/or entertainment system, in particular of a car, and/or a smartphone. A sensor system according to the second aspect of the present invention may comprise at least one sensor arrangement according to the first aspect of the present invention and may in particular to be configured for:
determining, based at least partially on sensor data captured using the sensor arrangement, a movement of at least one finger, preferably of the fingertip of the at least one finger, of a user while the user's hands are arranged at least partially above the interaction surface, and
generating at least one control command for at least partial control of a computer device and/or of at least one actuator in accordance with the movement of the at least one finger.

In one embodiment, in particular in a preferred embodiment, the sensor arrangement and/or the sensor system may be configured for generate a 3D image based on layering various sensor data from different sensor devices. Therefore, the sensor arrangement may be configured for depth sensing, wherein therefor the sensor arrangement may comprise at least one infrared sensor device, facilitating creation of the 3D image.

The captured sensor data may be processed by a processing unit, in particular by a processing unit of an electronic device, preferably by a processing unit of the computer device and/or the object and/or the actuator to be controlled touchless, wherein the captured sensor data is in particular processed in order to generate at least one control command corresponding to the user input lying in or be encompassed by the sensor data.

According to a third aspect of the present invention, an electronic device may be provided, in particular an electronic device comprising a display screen for displaying a scene and/or a keyboard, wherein the electronic device comprises at least one sensor arrangement according to the first aspect of the invention and/or a sensor system according to the second aspect of the present invention.

In one embodiment of the present invention, in particular in one embodiment of the any of the previously mentioned aspects, at least one sensor device, in particular at least one sensor array, may be arranged such that an interaction space can be observed in which user interaction is intended to occur for at least partial touchless control of a computer device and/or of at least one actuator, in particular for touchless control of the electronic device itself.

In one embodiment, at least one sensor device, in particular at least one sensor array, is arranged such that an interaction space extending at least above the dimensions of the (complete) interaction surface, in particular extending at least above the dimensions of a keyboard, can be observed. This enables touchless control from almost every typing position. Thereby, an advantageous user feeling may be achieved.

In one embodiment of the present invention, in particular in one embodiment of an electronic device, the electronic device comprises may comprise display screen for displaying a scene. The at least one sensor device, in particular at least one sensor array, may arranged in an outer edge area on the front side of the display screen of the electronic device. Thereby, an advantageous placement of at least one sensor device and an advantageous orientation of at least one sensor device's field of view, respectively an advantageous orientation of at least one sensor array's field of view, with respect to an interaction space can be achieved.

In one embodiment of the present invention, in particular in one embodiment of the any of the previously mentioned aspects, at least one sensor device and/or at least one sensor array may be arranged such that a field of view of the sensor device and/or the sensor array may be extending at least partly across a or the display, in particular at least partly diagonally. Thereby, an advantageous placement of at least one sensor device and an advantageous orientation of at least one sensor device's field of view, respectively an advantageous orientation of at least one sensor array's field of view, with respect to an interaction space can be achieved.

In one embodiment of the present invention, at least one sensor array may be arranged in an upper left corner area and/or in an upper right corner area of the display screen with respect to a user's view during use. Thereby, an advantageous placement of at least one sensor device and an advantageous orientation of at least one sensor device's field of view, respectively an advantageous orientation of at least one sensor array's field of view, with respect to an interaction space can be achieved.

The sensor array arranged in the upper left corner may have a field of view essentially oriented to the right, while the sensor array arranged in the upper right corner may have a field of view essentially oriented to the left. In other words: The sensor arrays may each have a field of view essentially diagonally extending over the display means.

In one embodiment of the present invention, at least one sensor array comprises at least two sensor devices and/or at least one sensor device and at least one emitter device. In particular, one device of the sensor array or sensor group being arranged in the upper left corner area may be located in a left vertical edge adjacent to the upper left corner or in a right vertical edge adjacent to the upper right corner of the display screen. Another device of the sensor array or the sensor group may particularly be located in a horizontal edge adjacent to the upper left corner and the upper right corner of the display screen.

In one embodiment, in particular in a preferred embodiment, the sensor arrangement may comprise at least two sensor arrays, wherein a first sensor array may be arranged in an upper left corner of the display screen, and a second sensor array may be arranged in an upper right corner of said display screen.

The sensor array arranged in the upper left corner may have a field of view being oriented at least essentially towards the right side of the display screen with respect to a user's view during use, while the sensor array arranged in the upper right corner may have a field of view being oriented at least essentially towards the left side of the display screen with respect to a user's view during use. In other words: The sensor arrays may each have a field of view being orientated at least essentially diagonally extending over the display screen and or towards a bottom part of the display screen.

In one embodiment of the present invention, wherein the electronic device comprises a keyboard, at least one sensor device, in particular at least one sensor array, is arranged on, in or near the keyboard, in particular adjacent, near or within the keyboard area, preferably essentially within a keyboard plane. Thereby, an advantageous placement of at least one sensor device and an advantageous orientation of at least one sensor device's field of view, respectively an advantageous orientation of at least one sensor array's field of view, with respect to an interaction space can be achieved.

In a further embodiment of the present invention, in particular in a preferred embodiment, at least one sensor device is arranged such that the sensor device is protruding from a circumferential surface in at least one state of operation of the electronic device, in particular, when arranged in an outer edge area on a front side of a display of the electronic device. Thereby, an advantageous placement of at least one sensor device and an advantageous orientation of at least one sensor device's field of view, respectively an advantageous orientation of at least one sensor array's field of view, with respect to an interaction space can be achieved.

Alternatively or in addition, at least one sensor device may be arranged and/or configured for being levelled to the circumferential surface at least in a second state of operation of the electronic device. Thereby, in particular in the second state of operation, a safe arrangement, for example during transport or in a dusty environment, of at least one sensor device can be achieved.

The circumferential surface may be, for example, a display screen surface at least partially being near or adjacent the at least one sensor device.

State of operation may be, for example a use state, for example a text processing status (entering text or preparing illustrations), a sleeping mode or a transportation state (in which a laptop might in particular be closed.

Is the electronic device a laptop device and the sensor arrangement or sensor system integrated into the laptop device, an angle sensor provided for detecting the display angle relative to the keyboard, in particular a keyboard plane may be advantageous and increase accuracy of the sensor arrangement and/or the sensor system. In particular calibration capabilities might increase, in particular when the captured sensor data can be processed at least partly dependent on the display angle.

The sensor arrangement or the sensor system, in particular the electronic device, may further comprise means for voice control and/or being configured for voice control. Hence, in a further embodiment of the present invention, in particular in a preferred embodiment, the sensor arrangement and/or the sensor system, in particular the electronic device, may in particular comprise means for voice control, in particular a voice control device, and/or is being configured to be communicatively coupled to voice control means, in particular to a voice control device. Thereby, further control options may be provided by which at least in some cases usability can be increased.

The sensor arrangement or the sensor system, in particular the electronic device, may further in particular be configured for recording, using a microphone, voice input of the user person and generating at least one voice-based control command. Said at least one voice-based control command may be related to the emulation of at least one mouse-functionality and/or gesture interaction, and/or the at least one voice-based control command may be supplementary commands facilitating further functionalities of the computer device if combinedly detected with the at least one characteristic, preferably position, movement and motion, of the user's hand.

Voice-based control offers its own unique set of advantages. On the one hand, it allows users to control devices without having to physically move their body or parts of their body at all. This can be particularly useful for people with disabilities or those who have limited mobility. On the other hand, voice-based control also allows for hands-free operation, which can be particularly useful in situations where users need to multitask or have their hands occupied, such as when cooking or working out.

When used together, touchless gesture control and voice-based control can be complementary to each other. For example, users can use voice-based commands to turn on an electronic device or select an option, and then use touchless gestures to fine-tune their selection or make more precise adjustments. This can provide a more seamless and natural user experience providing an extended set of functionalities.

The sensor arrangement or the sensor system, in particular the electronic device, may further comprise projecting means for visual aid, in particular for visualization of the interaction space. Hence, in addition or alternatively, the sensor arrangement and/or the sensor system, in particular the electronic device, may comprise means for visual control aid, in particular a visual control aid device, in particular for visualization of the interaction space, and/or is configured for being coupled to a visual control aid means, in particular to a visual control aid device.

The sensor arrangement or the sensor system, in particular the electronic device, may further in particular be configured for displaying, using a display means, a visual control aid being visually perceptible by the user. The visual control aid may provide the user with an indication of a position of the user's hand and/or movement of the user's hand and/or motion of at least one finger of the user's hand.

Said visual control aid may provide the user with a clear and easy to understand indication of the position of the user's hand, thus enabling the user to quickly learn how to efficiently interact. On the long run, by providing the user with a visual indication of the hand position, the method can help to improve the accuracy and precision during interaction. However, it may be provided the option to deactivate the visual control aid, e.g., after the user is familiar with the interaction scheme and does not need the visual control aid anymore. Of course, the visual control aid may be activated at any time according to the user's needs. Additionally or alternatively, it may be provided that the visual control aid may have a level of transparency when displayed by the display means, preferably the level of transparency being adjustable by the user. Additionally or alternatively, it may be provided that the position of the visual control aid displayed by the display means may be adjustable by the user. Each of said features make the method according to the present invention particularly adaptable the user's needs and preferences when interacting.

The visual control aid may include a visually perceptible virtual representation of the user's hand, the virtual representation preferably having the shape of a hand. The virtual representation of the user's hand may preferably be a predetermined 3D-illustration of a hand. This is particularly easy to understand also for unexperienced users and therefore provides an intuitive user experience.

The visual control aid may include a visually perceptible virtual representation of the interaction space, wherein an indication of a position of the user's hand and/or movement of the user's hand and/or motion of at least one finger of the user's hand is indicated with respect to the virtual representation of the interaction space. Displaying visually perceptible virtual representation of the interaction space enhances the user experience and enables the user to visually recognize where the interaction space is located.

It may be provided that the method further comprises projecting, using a projector, a visual indication providing the user at least partially with an indication of the position and/or size of the interaction space.

Projecting a visual indication for the user increases enhances the user experience and enables the user to visually recognize where the interaction space is located.

The electronic device, preferably the computer device, may comprise one or more of a processor, a non-transitory memory and/or a display means. The electronic device, preferably the computer device, may comprise and/or may be communicatively coupled to a microphone. The electronic device, preferably the computer device, may comprise a folding mechanism. This enhances the durability and robustness of the electronic device, preferably the computer device. The electronic device, preferably the computer device, may comprise and/or may be communicatively coupled to a keyboard. The electronic device, preferably the computer device, may comprise a housing having integrated therein the sensor means.

The embodiments presented with reference to a sensor arrangement according to the present invention and their advantages also apply accordingly to a sensor system and/or to an electronic device according to the present invention and vice versa.

Further features of the invention are apparent from the claims, the figures and the description of the figures. All the features and combinations of features mentioned above in the description, as well as the features and combinations of features mentioned below in the description of figures and/or shown alone in the figures, can be used not only in the combination indicated in each case, but also in other combinations or on their own.

The invention will now be explained in more detail with reference to preferred, non-limiting examples of embodiments and with reference to the accompanying drawings.

### BRIEF DESCRIPTION OF THE DRAWINGS

The disclosure may be better understood by reference to the following drawings, wherein functionally identical components have in particular the same reference signs. The figures show:
- Fig. 1: a principal illustration of a first example of a sensor system according to the present invention,
- Fig. 2: a first example of an electronic device according to the present invention in form of a laptop device comprising a sensor system according to the present invention,
- Fig. 3: a second example of an electronic device according to the present invention in form of a laptop device comprising a sensor system according to the present invention,
- Fig. 4: a schematic illustration of a section of a display screen with a first example of a sensor arrangement being integrated in the display screen,
- Fig. 5: a schematic illustration of a section of a display screen with a second example of a sensor arrangement being integrated in the display screen,
- Fig. 6a-d: a series of schematic illustrations for visualization of performing a touchless control input to an electronic device (here a laptop) according to the present invention comprising a sensor system according to the present invention,
- Fig. 7: a section of a display screen with a second example of a sensor arrangement being arranged on the front side of the display screen and protruding from the adjacent front surface of the display screen,
- Fig. 8: an enlarged view of the sensor array arranged in the upper left corner of the display screen of Fig. 11,
- Fig. 9: a further example of an electronic device according to the present invention in form of a laptop device comprising a sensor system according to the present invention,
- Fig. 10: a further example of an electronic device according to the present invention in form of a laptop device comprising a sensor system according to the present invention,
- Fig. 11: a further example of an electronic device according to the present invention in form of a laptop device comprising a sensor system according to the present invention,
- Fig. 12: a further example of an electronic device according to the present invention in form of an external physical keyboard device comprising a sensor system according to the present invention,
- Fig. 13: a further example of an electronic device according to the present invention in form of a monitor device comprising a sensor system according to the present invention, and
- Fig. 14: a further example of an electronic device according to the present invention in form of a tablet comprising a sensor system according to the present invention with three sensor arrays.

### DETAILED DESCRIPTION

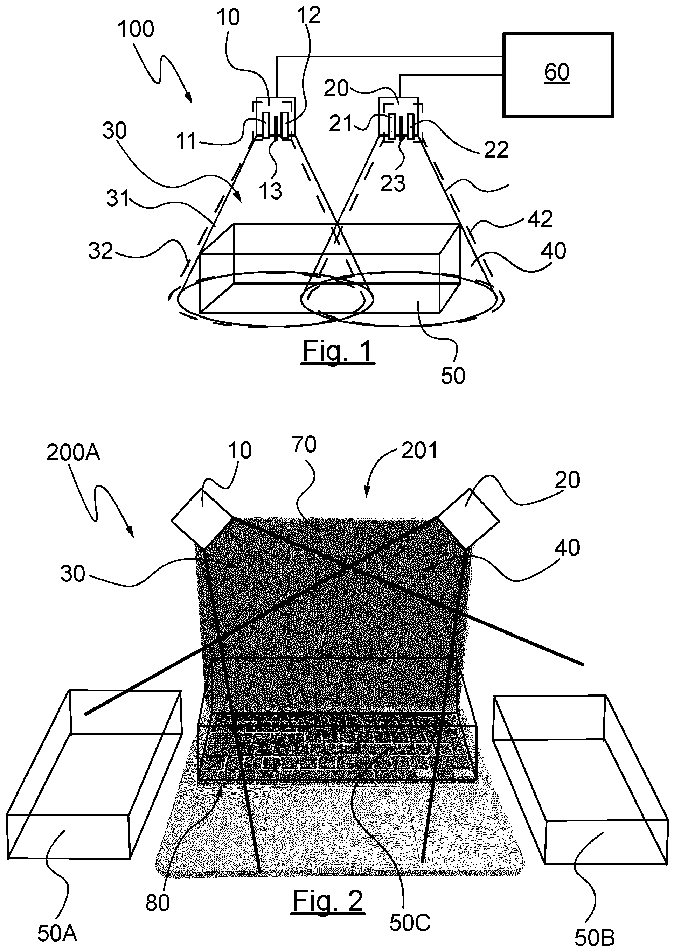

**Fig. 1** shows a principal illustration of a first example of a sensor arrangement 100 according to the present invention, wherein the sensor arrangement 100 is communicatively coupled to a processing unit 60. The sensor arrangement 100 and the processing unit 60 are part of an example of a not further indicated sensor system according to the present invention.

The sensor arrangement 100 comprises a first sensor array 10 and a second sensor array 20, wherein the first sensor array 10 and the second sensor array 20 are arranged relatively to each other such that the first array field of view 30 and the second array field of view 40 are at least partially overlapping, wherein the first array field of view 30 and as well the second sensor array field of view 40 each are cone-shaped.

The first sensor array 10 is of the stereovision type and comprises a first sensor device 11 and a second sensor device 12, wherein in this example both sensor devices 11 and 12 of the first sensor array are infrared cameras being arranged with a defined distance and orientation relatively to each other in a common housing. The first sensor device 11 and the second sensor device 12 are in particular arranged such that their also cone-shaped sensor fields of view 31 and 32 are overlapping at least completely.

To increase accuracy of the sensor array 10 the first sensor array 10 further comprises an emitting device 13, in this example an infrared laser projector 13.

In this example of a sensor arrangement 100, the second sensor array 20 is of the same type as the first sensor array 10, i.e. also of the stereovision type, and also comprises a first sensor device 21, a second sensor device 22, each being an infrared camera 21, 22, and also an emitting device 23 in form of an infrared laser projector 13. The sensor cameras 21 and 22 are also arranged that their cone-shaped fields of view 41, 42 are overlapping at least completely forming the array field of view 40 of the second sensor array 20.

The first array field of view 30 and the second array field of view 40, each being spatial array fields of view, are forming a spatial total detection area, in this example encompassing interaction space 50 completely, wherein the interaction space 50 in this example has a rectangular shape.

The interaction space 50 illustrated in Fig. 1, which can be observed completely by the sensor arrangement 100, respectively by the corresponding sensor system, is the maximum cuboid or rectangular shaped interaction space which can be observed completely by this sensor arrangement for observing a larger rectangular interaction space, the distance of at least one sensor array 10 or 20 to the interaction space may be increased. However, this leads to several issues as described in the summary of the invention. To overcome this problem, at least one further sensor array may be arranged additionally to the sensor arrangement 100, in particular by arranging it such that its array field of view is at least partly overlapping with one of the other array fields of view 30, 40 and such that the arrangement results in a larger spatial total detection area.

**Fig. 2** shows a first example of an electronic device 200A according to the present invention in form of a laptop device comprising a sensor system according to the present invention. The laptop device comprises a display screen 70 with a display 70 having a front display surface. The electronic device 200A comprises a first sensor array 10 and a second sensor array 20, each being configured as described with respect to Fig. 1. The direction of the array fields of view 30 and 40 of the sensor arrays 10 and 20 are illustrated schematically for visualization. As can be seen from Fig. 2 the array fields of view 30 and 40 are extending at least partly across the display 70 from a left side to a right side for sensor array 10 and vice versa for sensor array 20 with respect to an orientation of the display 70 and/or the display screen 201 during use of the laptop 200A.

By this sensor arrangement, respectively with this electronic device, a first interaction space 50A on the left side of the laptop 200A can be observed and a second interaction space 50B on the right side. This allows, for example, at least partial touchless control of the electronic device 200A by left hand and/or right hand mimicking the use of a physical input device in form of a computer mouse, in particular by mimicking the use of a computer mouse using the left hand in the left interactions space 50A and/or by mimicking the use of a computer mouse using the right hand in the right interactions space 50B.

This sensor arrangement is further configured to observe interaction space 50C arranged over the keyboard 80, in particular over its interaction surface, wherein interaction space 50C is rectangular and extending parallel to the keyboard 80 and over the complete the keyboard 80. The sensor arrangement is configured for detection of a movement of a finger of a user's hand, in particular of a fingertip, in particular while the user's hand is arranged at least partially above the keyboard, for example while and before or after immediately after typing.

Said arrangement of the sensor arrays 10 and 20 is particularly advantageous for two main reasons:
On the one hand, by having a field of view 30, 40 extending at least partly across to the display 70 from a left side to a right side and/or vice versa with respect to at least one orientation of the display 70 during usage, the respective fields of view 30, 40 are particularly large, e.g., also covering a space in front of the display screen 201 and/or above a surface of a keyboard 80. This enables observing on or more interaction spaces 50A, 50B by resulting in a large spatial total detection area, thereby increasing the variety of options for a user to interact. In particular, the user may interact emulating mouse functionalities, as described above, but also by performing free space gestures, as described above.

On the other hand, the precision and/or quality of captured sensor data when capturing a user's hand while mimicking usage of a physical input device as a computer mouse is increased due to the fact that the sensor arrays 10, 20, in particular if a stereovision sensor means is used, may have a minimum distance in which captured sensor data are of less precision. Based on the above-described sensor arrangement 100, a distance between the sensor arrays 10 and 20 and the observed user's hand may always kept during usage. This distance may ideally be larger than said minimum distance.

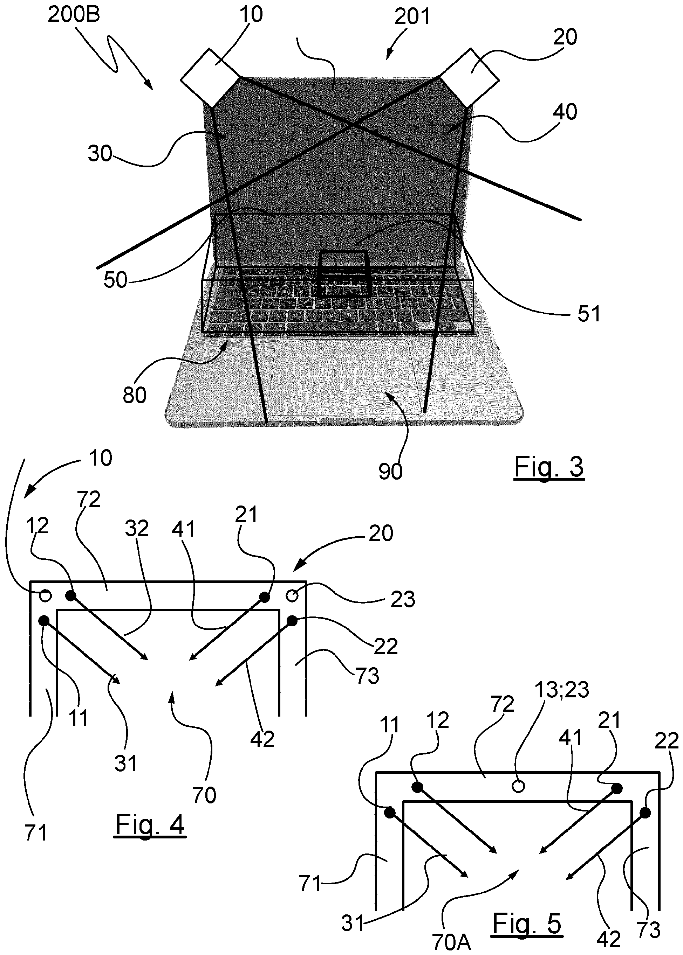

**Fig. 3** shows a second example of an electronic device 200B according to the present invention in form of a laptop device 200B comprising a sensor system according to the present invention, wherein this sensor arrangement with its sensor arrays 10 and 20 is configured for observing an almost cubic interaction space 50 arranged above the keyboard 80 and in front of the display 70. This sensor arrangement is configured for capturing and/or processing the sensor data depending on their zone of origin.

In this example, in a center zone 51 sensor data can be captured with a higher resolution compared to the outer zone (not further indicated by a reference sign). This allows capturing or processing sensor data with different resolutions and/or scale modifications by utilizing a transfer ratio. This enables users to control larger input areas with smaller movements or achieve precise control over smaller interaction areas using larger movements. This might be helpful in several applications. In particular a higher precision can be achieved for finger or fingertip movements in the center area. Thereby, touchless control using a second or third finger or its fingertip of a user's hand can be improved.

In one embodiment, a transfer ratio may in particular be customized as needed, allowing for flexible control options. For instance, the 3D interaction space 50 may incorporate different, for example curved and linear transfer ratios (realized by defined zones within the interaction space 50) depending on the specific requirements of the application.

Ratio and/or scaling further allows correction of distorted or not ideally shaped interaction spaces. Customization, in particular ratio customization, in particular spatial ratio customization, enables users also to have finer control over inputs in certain regions of the user input areas, for example in inner or outer fields or zone of the interaction space.

By adjusting the dimensions, shape, and transfer ratios of the interaction space, users can achieve an optimal balance between precision and comfort, tailoring the interaction space to their specific needs and preferences. This adaptability ensures that the interaction space can cater to various use cases and environments, enhancing the overall user experience.

**Fig. 4** shows a schematic illustration of a section of a display 70 with a first example of a sensor arrangement being integrated in the corresponding display screen, wherein this figure shows exemplarily how the components of the sensor arrays 10 and 20 may be arranged in the upper left and right corners of the display screen. One advantageous arrangement can be achieved by placing the first sensor device 11 near the upper left corner and in the left vertical edge or frame 71 of the display 70, the second sensor device 12 near the upper left corner and in the upper horizontal edge or frame 72 of the display 70, and the laser projector 13 in between in the edge or frame area in the upper left corner, and by placing the components of the second senor array 20 in the upper right corner. The first sensor device 21 is placed near the upper right corner in the upper horizontal edge or frame 72 of the display 70, the second sensor device 22 is placed near the upper right corner in the right vertical edge or frame 72 of the display 70, and the laser projector 23 in between in the edge or frame area in the upper right corner.

**Fig. 5** shows a schematic illustration of a section of a display screen with a second example of a sensor arrangement being integrated in the display screen, wherein in this example the sensor array 10 and 20 comprise a commonly/shared used laser projector 13, 23 arranged in the center of the upper horizontal edge or frame 72 of the display screen. This allows omitting of one laser projector.

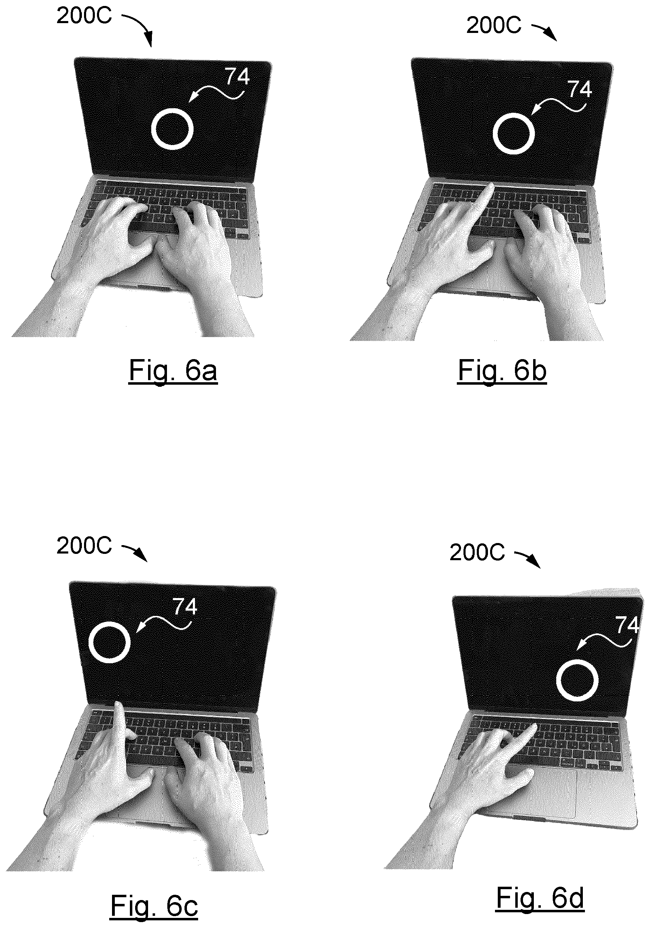

**Fig. 6a****-d** show a series of schematic illustrations for visualization of performing a touchless control input to an electronic device (here laptop 200C) according to the present invention comprising a sensor system according to the present invention.

By moving a finger, here the second finger of the left hand of the user, a mouse pointer 74 displayed on the display 70 of the computer device 200C can be controlled, in particular be moved in accordance to the finger movement. This allows smooth and efficient touchless control of the computer device, in particular without leaving a typing position.

The mouse pointer 74 displayed on the display 70 will move accordingly to the movement of the mouse 53 on the interaction surface 52, what is symbolized by the cross of arrows on the user's hand 54 and on the display 70.

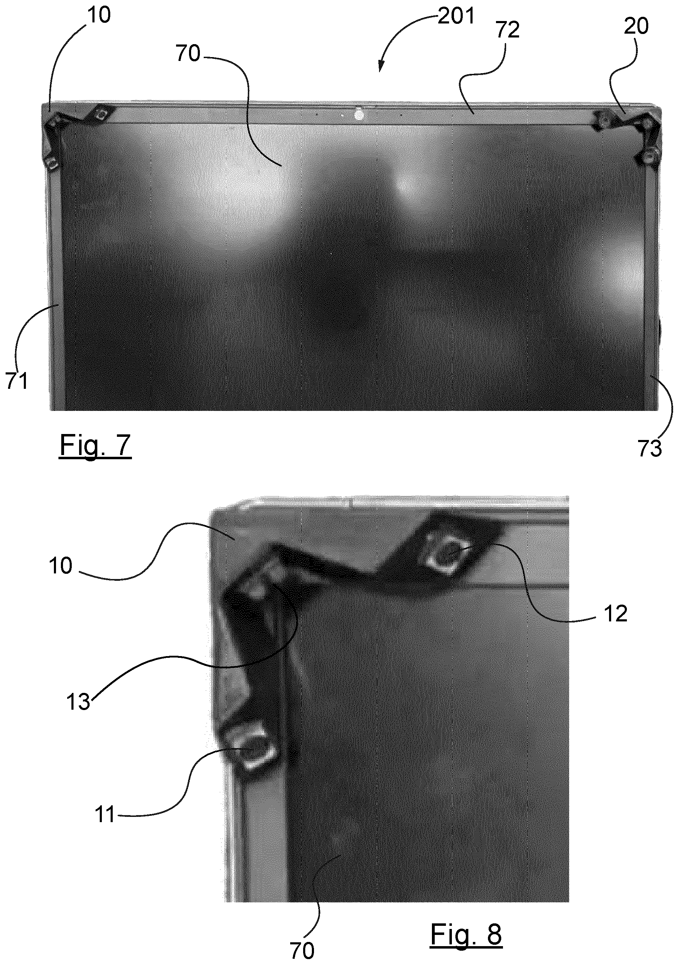

**Fig. 7** shows a photographic illustration of a section of a display screen 201 with a second example of a sensor arrangement being arranged on the front side of the display screen 201 and protruding from the adjacent front surface of the display 70. This sensor arrangement comprises a first sensor array 10 arranged in the left upper corner of the display screen 210 and a second sensor array 20 arranged in the upper right corner of the display screen 201. The components of the sensor arrays 10 and 20 are arranged as schematically illustrated in Fig. 4 and described above with respect to Fig. 4.

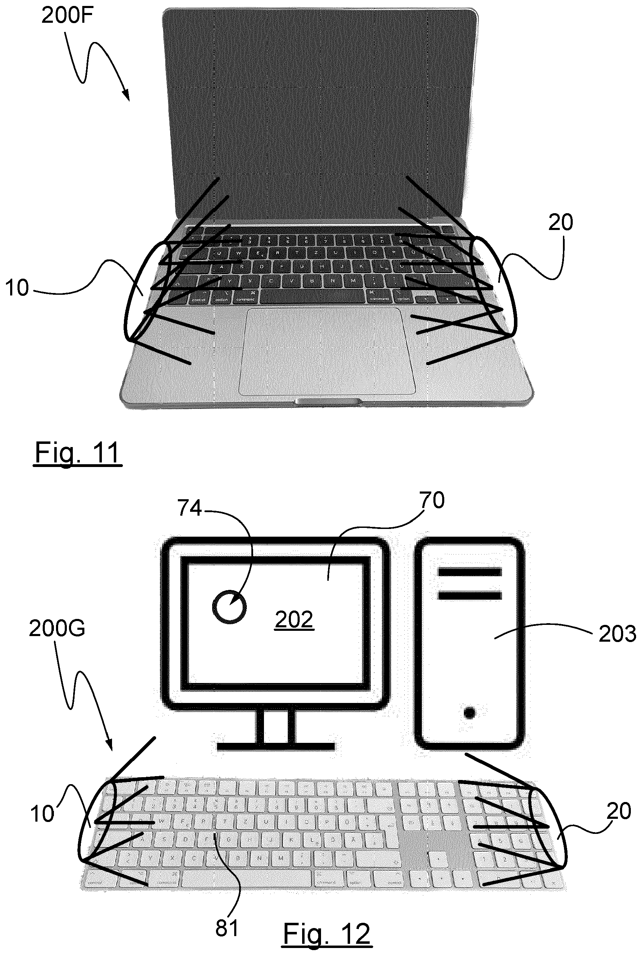

**Fig. 8** shows an enlarged view of the sensor array 10 arranged in the upper left corner of the display screen of Fig. 11. From this figure it becomes apparent that the components 11, 12 and 13 (and from Fig. 11 also that this is the same for the components 21, 22 and 23 of the second sensor array 20), are integrated into a common housing which is mounted onto the front side of the display 70 such that the sensor devices 11 and 12 and as well the emitting device 13 are protruding from that front surface of the display 70. Thereby a very advantageous array field of view can be achieved.

To ensure that a laptop can be fully closed and without any damage of any of the sensor arrays 10 or 20 (when the display screen 201 with the sensor arrangement is part of a foldable laptop with a flange), the laptop, in particular the housing supporting and/or surrounding the keyboard 80 may comprise at least one corresponding cavity or recess, in which at least one of the sensor arrays 10, 20 fits when closing, in particular such that complete and flat closing of the foldable laptop is possible.

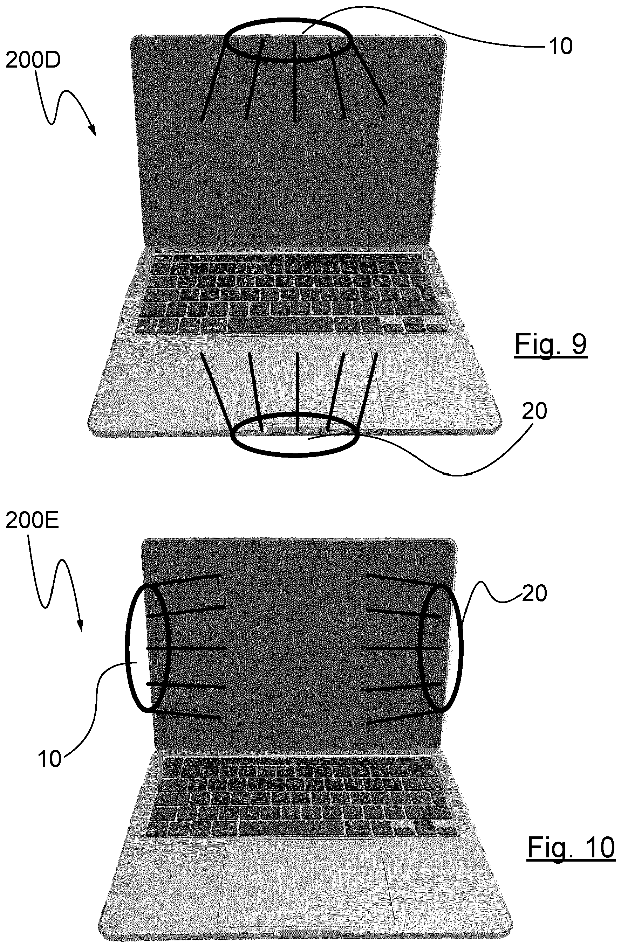

**Fig. 9** shows a further example of an electronic device 200D according to the present invention in form of a laptop device 200D comprising a sensor system according to the present invention, wherein in this example the first sensor array 10 is arranged in the middle of the upper horizontal edge or frame area of the display screen and the second sensor array 20 is arranged in the middle of the proximal, extending transversely from left to right edge area of the keyboard housing, wherein the second sensor array 20 is preferably arranged in a keyboard plane and in particular protruding from a keyboard surface for an advantageous array field of view.

**Fig. 10** shows a further example of an electronic device 200E according to the present invention in form of a laptop device 200E comprising a sensor system according to the present invention, wherein in this example the first sensor array 10 is arranged in the middle of the left vertical edge or frame area of the display screen and the second sensor array 20 is arranged in the middle of the right vertical edge or frame area of the display screen.

**Fig. 11** shows a further example of an electronic device 200F according to the present invention in form of a laptop device 200F comprising a sensor system according to the present invention, wherein in this example the first sensor array 10 is arranged in the middle of the left edge area of the keyboard housing left from the keyboard with respect to a usage position of the electronic device 200F, and the second sensor array 20 is arranged in the middle of the right edge area of the keyboard housing right from the keyboard.

**Fig. 12** shows a further example of an electronic device 81 according to the present invention in form of an external physical keyboard device 81 comprising a sensor system according to the present invention, wherein in this example the first sensor array 10 is arranged in the middle of the left edge area of the keyboard housing left from the keyboard with respect to a usage position of the keyboard device 81, and the second sensor array 20 is arranged in the middle of the right edge area of the keyboard housing right from the keyboard. The keyboard 81 is configured for touchless control of desktop computer system 200G comprising a monitor 202 with a display 70 and the desktop computer 203, wherein in particular a mouse pointer 74, which can be displayed on the display 70, can be controlled touchless using the keyboard 81 while the keyboard 81 is communicatively coupled to the desktop computer system 200G.

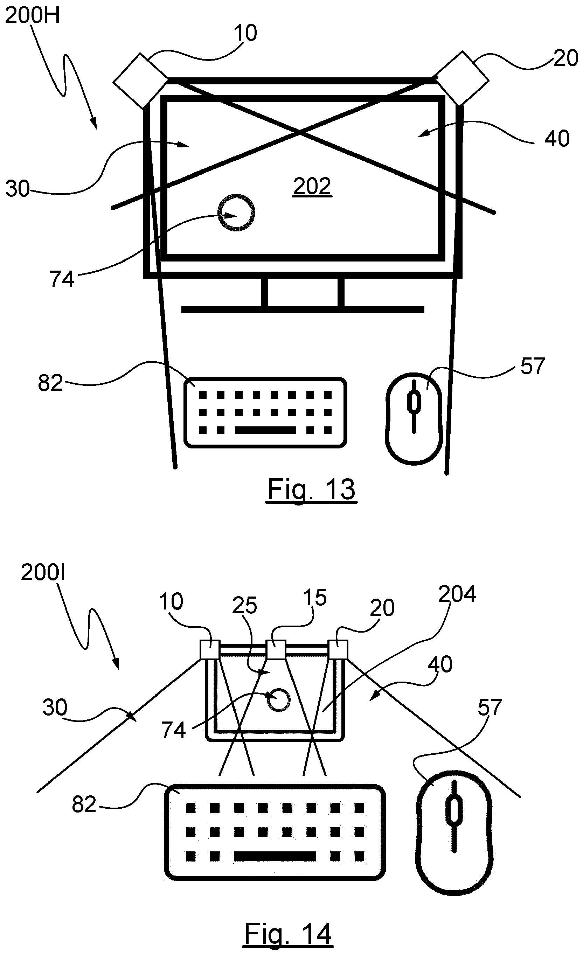

**Fig. 13** shows a further example of an electronic device 202 according to the present invention in form of a computer device 202 in form of a monitor 202 comprising a sensor system according to the present invention with a first sensor array 10 and a second sensor array 20 configured for touchless control of the computer device 202. For improved usability, this sensor arrangement, in particular the electronic device 202, in particular the monitor 202, further comprises at least one projector device for projecting a virtual or keyboard 82 and a virtual mouse 57 onto a surface, in particular on the surface of a table, to provide a visual aid for the user, in particular where to perform a user interaction for touchless control of the computer device.

**Fig. 14** shows a further example of an electronic device according to the present invention comprising a sensor system according to the present invention with three sensor arrays 10, 15 and 20, wherein the third sensor array also has a cone-shaped array field of view 25. This sensor arrangement may in particular be useful for larger screens such as big screens, lager TV device screens and so on, but it is not limited to such setups. Also a tablet device or any other electronic device may comprise three or more sensor arrays. This electronic device 2001 also comprises at least one projector device for projecting a virtual or keyboard 82 and a virtual mouse 57 onto a surface, in particular on the surface of a table, to provide a visual aid for the user, in particular where to perform a user interaction for touchless control of the computer device.

Further variations, combinations and modifications which are not shown but are encompassed by the corresponding scope of the claims are possible.

### REFERENCE SIGNS

- 100: sensor system sensor according to the present invention
- 200A-I: electronic device according to the present invention
- 10: first sensor array
- 11: first sensor device of the first sensor array
- 12: second sensor device of the first sensor array
- 13: emitter device
- 15: third sensor array
- 20: second sensor array
- 21: first sensor device of the second sensor array
- 22: second sensor device of the second sensor array
- 23: emitter device
- 25: third array field of view (field of view of the third sensor array)
- 30: first array field of view (field of view of the third sensor array)
- 31: field of view of the first sensor device of the first sensor array
- 32: field of view of the second sensor device of the first sensor array
- 40: second array field of view (field of view of the second sensor array)
- 41: field of view of the first sensor device of the second sensor array
- 42: field of view of the second sensor device of the second sensor array
- 50, 50A-C: interaction space
- 51: interaction zone within the interaction space
- 54: user's hand
- 57: projected virtual computer mouse
- 60: processing unit
- 70, 70A: display with integrated sensor arrays
- 71: left vertical edge area of the display screen
- 72: upper horizontal edge area of the display screen
- 73: right vertical edge area of the display screen
- 74: mouse pointer
- 80: physical keyboard
- 81: external physical keyboard
- 82: projected virtual keyboard
- 201: display screen
- 202: display monitor
- 203: desktop computer
- 204: TV device

## Claims

1. A sensor arrangement (100) for at least partial touchless control of a computer device and/or of at least one actuator, the computer device and/or the at least one actuator being controllable at least partly by a user using a user's hand (54) and/or one or more fingers of the user's hand, optionally using a keyboard,
wherein the sensor arrangement is configured to be arranged relative to an interaction surface, such as a surface of a keyboard (80, 81), a tabletop and/or lap of a user, and such that an interaction space arranged at least partly above the interaction surface can at least partially be observed,
wherein the sensor arrangement comprises at least a first sensor group (10, 20), in particular a first sensor array, comprising at least one sensor device (11, 12; 21, 22), the first sensor group having a first array field of view (30, 40) and being capable of observing a first spatial array detection area encompassing at least a part of the interaction space (50, 50A-C),
wherein the sensor arrangement is configured such that in a functional state of use an interaction space arranged at least partly above the interaction surface can at least partially be observed, and
wherein the sensor arrangement is further configured for capturing sensor data, in particular depth sensor data, of a movement of at least one finger, preferably of the fingertip of the at least one finger, of a user at least while the user's hands are arranged at least partially above the interaction surface.

2. The sensor arrangement of claim 1,
wherein the sensor arrangement further comprises at least one further sensor group, in particular at least one further sensor array, comprising at least one sensor device, the at least one further sensor group having a further array field of view and being capable of observing a further spatial array detection area encompassing at least a part of the interaction space,
wherein the first sensor group and the at least one further second sensor group are arranged spaced apart from each other, and
such that the first spatial array detection area and the at least one further spatial array detection area define a continuous spatial total detection area, and
such that the first spatial array detection area and the at least one further spatial array detection area are overlapping partially.

3. The sensor arrangement of claim 1 or 2,
wherein the sensor arrangement is configured for observing a rectangular or cuboid interaction space, the interaction space, in particular the rectangular or cuboid interaction space, comprising a spatial expansion and/or having a geometry adapted to a spatial expansion required for mimicking the use of a defined physical input device,
wherein the interaction space is encompassed completely by the spatial total detection area.

4. The sensor arrangement of any one of the preceding claims 1 to 3,
wherein the sensor arrangement is further configured also for touch control of a computer device and/or at least one actuator, and further comprises at least one touch sensitive sensor device.

5. The sensor arrangement of any one of the preceding claims 1 to 4, wherein the sensor arrangement is configured for being integrated into an electronic device, in particular in an electronic device comprising a display screen and/or a keyboard, preferably in a computer device comprising a display screen and/or a keyboard.

6. A sensor system for at least partial touchless control of a computer device and/or of at least one actuator, in particular for at least partial touchless control of a computer device and/or of one or more actuators of an object, the computer device and/or the at least one actuator being controllable at least partly using a keyboard, in particular for at least partial touchless control of a laptop, a tablet, a personal computer, a TV device, an info- and/or entertainment system, in particular of a car, and/or a smartphone using a keyboard
wherein the sensor system comprises at least one sensor arrangement of any one of the claims 1 to 5, and is configured for:
determining, based at least partially on sensor data captured using the sensor arrangement, a movement of at least one finger, preferably of the fingertip of the at least one finger, of a user while the user's hands are arranged at least partially above the interaction surface, and
generating at least one control command for at least partial control of a computer device and/or of at least one actuator in accordance with the movement of the at least one finger.

7. An electronic device, in particular an electronic device comprising a display screen for displaying a scene and/or comprising a keyboard or a keyboard device,
wherein the electronic device comprises at least one sensor arrangement of any one of the preceding claims 1 to 5 or a sensor system of claim 6.

8. The electronic device of claim 7,
wherein at least one sensor device, in particular at least one sensor array, is arranged such that an interaction space extending at least above the dimensions of the interaction surface, in particular extending at least above the dimensions of a keyboard, can be observed.

9. The electronic device of claim 7 or 8,
wherein the electronic device comprises a display screen for displaying a scene, and
wherein at least one sensor device, in particular at least one sensor array, is arranged in an outer edge area on the front side of the display screen.

10. The electronic device of any one of claims 7 to 9,
wherein at least one sensor device and/or at least one sensor array is arranged such that a field of view of the sensor device and/or the sensor array is extending at least partly across the display, in particular at least partly diagonally.

11. The electronic device of any one of claims 7 to 10,
wherein at least one sensor array is arranged in an upper left corner area and/or in an upper right corner area of the display screen with respect to a user's view during use.

12. The electronic device of any one of claims 7 to 11,
wherein at least one sensor array comprises at least two sensor devices and/or at least one sensor device and at least one emitter device,
wherein one device of the sensor array arranged in the upper left corner area is located in a left vertical edge adjacent to the upper left corner or in a right vertical edge adjacent to the upper right corner of the display screen, and
wherein one device is located in a horizontal edge adjacent to the upper left corner and the upper right corner of the display screen.

13. The electronic device of any one of claims 7 to 12,
wherein the electronic device comprises a keyboard, and
wherein at least one sensor device, in particular at least one sensor array, is arranged on, in or near the keyboard, in particular adjacent, near or within the keyboard area, preferably essentially within a keyboard plane.

14. The electronic device of any one of claims 7 to 13,
wherein at least one sensor device is arranged such that the sensor device is protruding from a circumferential surface in at least one state of operation of the electronic device, in particular, when arranged in an outer edge area on a front side of a display of the electronic device, and, optionally, for being levelled to the circumferential surface at least in a second state of operation of the electronic device.

15. The electronic device of any one of claims 7 to 14,
wherein the electronic device further comprises means for voice control, in particular a voice control device, and/or is being configured for being communicatively coupled to voice control means, in particular to a voice control device, and/or
wherein the electronic device further comprises means for visual control aid, in particular a visual control aid device, in particular for visualization of the interaction space, and/or is configured for being coupled to a visual control aid means, in particular to a visual control aid device.
